# EUROPEAN PATENT SPECIFICATION

(11) **EP 2 660 125 B1**
(45) Date of publication and mention of the grant of the patent: **04.05.2016**
(21) Application number: 13447009.5
(22) Date of filing: 25.04.2013
(51) Int. Cl.: B62D 3/14, B62K 21/00, F15B 7/00

(54) **Compact hydraulic steering system**
KOMPAKTES HYDRAULISCHES LENKSYSTEM
SYSTÈME COMPACT DE DIRECTION HYDRAULIQUE

(30) Priority: 03.05.2012 BE 201200292
(43) Date of publication of application: 06.11.2013
(73) Proprietor: Van Isterdael, Ivo, 1760 Roosdaal (BE)
(72) Inventor: Van Isterdael, Ivo, 1760 Roosdaal (BE)

(56) References cited:
- DE-A1- 3 221 035
- GB-A- 1 274 441
- IT-B- 1 171 972
- JP-A- H01 103 592
- JP-A- H01 109 187
- JP-A- 2004 352 062
- US-A- 3 970 009

## Description

### BACKGROUND OF THE INVENTION

The invention described hereunder relates to a compact hydraulic steering system with a monitor and compensation device.

The compact hydraulic steering system with a monitor and compensation device has initially been designed to overcome certain drawbacks typical for the steering of motorcycles having no telescopic front fork but a front wheel suspension by means of (a) suspension arm(s) directly connected to the frame. Traditionally the steering of a motorcycle happens by means of a front fork which consists generally in a pair of telescopic damper struts located on either side of the front wheel and attached to the frame of the motorcycle using yokes connecting the forks to the headstock. The telescopic front fork does not only ensure the connection between the frame and the front wheel but also ensures suspension and damping of the front wheel. From a technical point of view this is not an easy task. The reason is to be found in the construction of the telescopic front fork itself. A fast rotating wheel, continuously stressed by irregularities of the road, is situated at the lower end of the fork between both fork legs which need to process these forces on the wheel not only in normal straight-line driving conditions but also when taking turns or when braking firmly. The fork yokes are situated at the other end, at the top of the front fork. These fork yokes hold both fork legs in place and connect them to the frame via the headstock. The place where the forces occur, at the bottom between the road surface and the tire, and the place where the forces are absorbed by the frame, at the top, are relatively distant from one another. This makes that the forces that appear between the wheel and the road surface act on the headstock and the frame using a long lever via the front fork. Therefore, the telescopic front fork and the headstock need to be sufficiently rigid and firm. The frame will therefore be very robustly manufactured in the area of the headstock. The front fork needs to perform a rigid connection between the wheel spindle and the headstock and has to guarantee, next to steering, also the suspension and damping of the front wheel. In order to enable a stable steering, the front fork is raked back from the vertical providing the necessary trail to the front wheel. As a result, the telescopic front fork will not only be subjected to axial forces but also be exposed to bending when the suspension compresses or expands. This has a negative influence on the well-functioning of the suspension and hinders a smooth sliding in one another of the inside and outside leg. Lastly, the front fork is stressed particularly heavily while braking, which does not stimulate the well-functioning of the suspension, which is crucial during the braking process.

Several motorcycle manufacturers have tried to overcome the inherent disadvantages of the telescopic front fork through the design of an alternative front wheel suspension. A good and functional alternative to the traditional front fork has been designed by BIMOTA (cf. European patent 0 432 107 B1 of BIMOTA publication 18.01.95 Bulletin 95/03).The design of these systems have numerous advantages and offers solutions to the abovementioned disadvantages inherently associated to the front fork. Since no use is made of a telescopic front fork, the headstock can be done without and the frame construction becomes less complicated. The forces that appear on the wheel while driving and braking are directly transferred to the frame via the suspension arm(s) and have no negative influence on the functioning of the suspension. The disadvantage of this alternative front wheel suspension is the complex mechanical hub steering system through adjustable linkage rods, levers and pivots between the steer and the rotary hub in the inner wheel.

The hub steering system developed by John Difazio GB 1274441 A uses a rather complex mechanical steering system through adjustable linkage rods, levers and pivots between the steer and the rotary hub in the inner wheel. The principal drawback of this system is that when the steer is rotated the movement of the suspension generates an extra rotation of the wheel making steering and suspension interdependent. The external linkages, rods, levers and pivots between the steer and the hub in the inner wheel increase the unsprung mass and increase the need for maintenance as they are exposed to dirt, mud, rain and other external influences. Furthermore, with the use of external steering devices the appearance is not aesthetically sound and by consequence renders it unattractive from a commercial point of view.

As replacement for this mechanical hub steering system, a couple of alternatives were tested and a hydraulic steering or steering systems by means of cables were used. Neither of these options has been successful to date due to being too complex or unreliable. Bimota (cf. patent IT 1 171 972 B 10 June 1987) and Suzuki (cf. patent JP H01 109187 A *SUZUKI MOTOR CO 26 April 1989)* developed hydraulic steering for motorcycles with steering cylinders externally located between the suspension arm(s) and the rotary hub in the wheel. For directing these steering cylinders, extra steering cylinders being connected to the steer or a motor-driven hydraulic pump *(cf. patent* JP H01 115791 A *SUZUKI MOTOR CO 9 May 1989)* were used. Disadvantage of this hydraulic system is that due to the inertia of the used components, the steering movements cannot perfectly be transferred directly to the wheel that is being steered.

Moreover, in case a motor-driven hydraulic pump is used, steering becomes practically impossible when the engine is not running. Furthermore, with the use of external steering cylinders the appearance is not aesthetically sound and by consequence renders the steering through hydraulic cylinders unattractive from a commercial point of view. Lastly, the presence of external steering cylinders increases the unsprung mass. The same disadvantages, with the exception of the increase in unsprung.mass, occur when the mechanical steering through rods and pivot is replaced by a steering system using cables.

The invention relates to a compact hydraulic steering system using hub steering and distinguishes itself from the above mentioned hub steering systems due to the absence of an external device or a mechanical connection between the wheel that need to be directed and the steer. A hydraulic actuator, being a rotary or piston actuator, within the wheel spindle and the steering house in the inner wheel, driving the steering axle to which the wheel hub with the wheel is connected, ensures the steering of the wheel.

The compact hydraulic steering system makes steering and suspension independent from each other. Steering is done making use of the hydraulic actuator, being a rotary or piston actuator, using the limited space inside the inner wheel, directing the wheel of the motor vehicle in a simple, safe, independent, non-mechanical, precise and reliable manner, thereby maintaining the steering angle of the wheel and the steer synchronous by a monitor and compensation device. As the hydraulic actuator is located inside the wheel spindle and the steering house forming an integral housing, the system can't be seen from the outside which implies a significant improvement in terms of aesthetical point of view and design. As a consequence the compact hydraulic steering system offers the constructor a safe and reliable steering system with no need for external devices, actuators or mechanical components. It offers the constructor a significant freedom in the design of the wheel suspension and the choice for double sided or single-sided suspension arm because all the available space can be used freely without having to take into account necessary space for external actuators, linkage rods, levers and pivots between the steer and the rotary hub in the inner wheel.

### SUMMARY OF THE INVENTION

The invention is defined claim 1 and the embodiment described hereunder is a compact hydraulic steering system with a monitor and compensation device, abbreviated CHS-Z, that by means of hydraulic actuators inside the wheel spindle and the steering house in the inner wheel and at the steer, being rotary actuators or piston actuators, directs the wheel(s) of the vehicle in a simple, safe, independent, non-mechanical, precise and reliable manner, thereby maintaining the steering angle of the wheel and the steer synchronously by means of a monitor and compensation device. The CHS-Z directs the hydraulic actuator inside the wheel spindle and the steering house in the inner wheel by means of the hydraulic actuator at the steer. The compact steering house is situated centrally in the wheel hub around which the wheel spins. A hydraulic actuator, being a rotary or piston actuator, within the steering house in the inner wheel ensures the rotation of the steering axle and the wheel hub to which it is connected. The steering angle of the wheel and the steer are kept synchronous by a monitor and compensation device. This steering system distinguishes itself from the traditional steering devices through it extremely compact build inside the wheel hub in the inner wheel and the absence of a mechanical connection between the wheel(s) that need to be directed and the steer. It offers the constructor a safe and reliable steering system on top of a significant freedom in the design of the wheel suspension.

### BRIEF DISCRIPTION OF THE DRAWINGS

Figure 1: Side view of the inner wheel showing the three main components: the wheel hub (1), the steering house (2) and the steering axle (3) - (scale 1/1).
Figure 2: Plan view of the inner wheel showing the wheel hub (1), the steering house (2) with the rotary actuator (10) and the steering axle (3) - (scale 1/1).
Figure 3: Cross section of the steering house (2) and the wheel spindle (4) together forming an integral housing within which the rotary actuator (10) drives the steering axle (3) - scale (1/1).
Figure 4: Plan view of the inner wheel showing the wheel hub (1), the steering house (2) with the piston actuator comprising a piston rod (15), the pistons (16), the gear plate (17) and the steering axle (3) - (scale 1/1).
Figure 5: Cross section of the steering house (2) and the wheel spindle (4) together forming an integral housing within which the piston actuator, comprising a piston rod (15), the pistons (16) and the gear plate (17) drives the steering axle (3) - (scale 1/1)
Figure 6: Schematic representation of the steering of the wheel hub (1) by the steer (18) with monitor and compensation device (22). On the right hand side is the flow scheme for the steering by means of rotary actuators (19) and (23). On the left hand side is the flow scheme for the steering by means of piston actuators (20) and (24).
Figure 7: Schematic representation of the steering of the wheel hub (1) by the steer (18) with monitor and compensation device (22) combined with a device for steering damping. On the right hand side is the flow scheme for the steering by means of rotary actuators (19) and (23) combined with a steering damper (25). On the left hand side is the flow scheme for the steering by means of piston actuators (20) and (24) combined with a steering damper (26).

### DETAILED DESCRIPTION OF COMPACT HYDRAULIC STEERING SYSTEM

Document GB 1274441 A shows a mechanical hub steering system according to the preamble of claim 1. The hub steering system as described in document GB 1274441 A uses a complex mechanical steering system through adjustable linkage rods, levers and pivots between the steer and the rotary hub in the inner wheel.

The compact hydraulic steering system described hereafter replaces these external complex mechanical steering devices by using the steering house and the wheel spindle as an integral housing containing the hydraulic actuator, being a rotary or piston actuator, which steers the wheel driving the steering axle.

The compact hydraulic steering system with a monitor and compensation device (CHS-Z) is composed of three main components:
- the inner wheel containing the wheel hub, the steering axle, the steering house and the wheel spindle together forming an integral housing
- the hydraulic components ensuring the steering
- the monitor and compensation device with the Electronic Control Unit (ECU) ensuring a perfectly synchronous steering angle of the wheel hub with and the steer based on information from the angle sensors

### The inner wheel

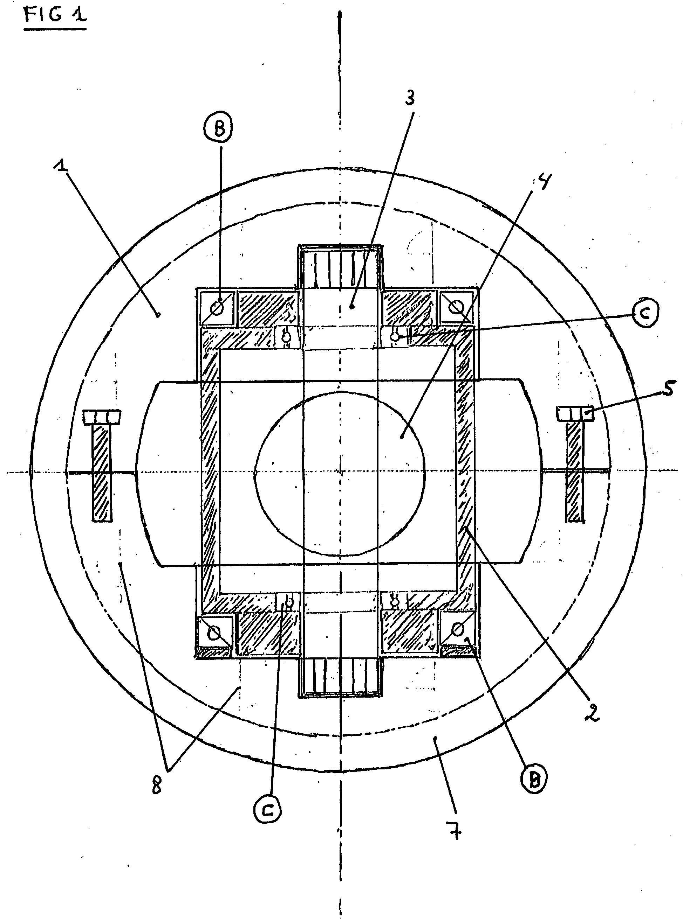

The inner wheel contains three main components (figure 1, 2 and 4):
- the wheel hub (1)
- the steering house (2) and the wheel spindle (4) forming an integral housing for the hydraulic actuator being a rotary (10) or piston actuator (15)
- the steering axle (3)

The wheel hub (1) consists of two halves that are connected using bolts (5). The wheel (6) spins around a wheel hub (1) by means of bearings (A). On both sides of the wheel hub (1) side plates (7) are fixed using bolts (8), on which brake callipers can be fitted. The wheel bearings (A) are clamped in the inner wheel (6) together with the spacer (9). The wheel is positioned on the wheel hub (1) using the side plates (7).

The wheel hub (1) encloses the steering house (2) and is linked to the steering axle (3). The wheel hub (1) can rotate around the steering house (2) by means of bearing (B). The steering axle (3) rotates in the steering house (2) by means of bearing (C).

The steering house (2) and the wheel spindle (4) together forming an integral housing for the hydraulic actuator, are situated centrally in the wheel hub (1) when seen in a top view of the wheel (6). The wheel spindle (4) is held from both sides by the suspension arms connected to the frame of the vehicle. The wheel spindle (4) can also be connected to the frame through a single-sided suspension arm. In that case, the wheel spindle (4) is clasped on the right or left side and the wheel hub (1) is completely closed from one side.

From the moment the steering axle (3) turns to the left or the right, the wheel hub (1) will follow and also rotate around the steering house (2). The maximum steering angle λ_{H} of the wheel hub (1) is defined by diameter and width of the wheel hub (1) and the diameter of the wheel spindle (4). The configuration of the steering house as depicted in figures 1, 2 and 4 allows for a steering angle λ_{H} of 24°.

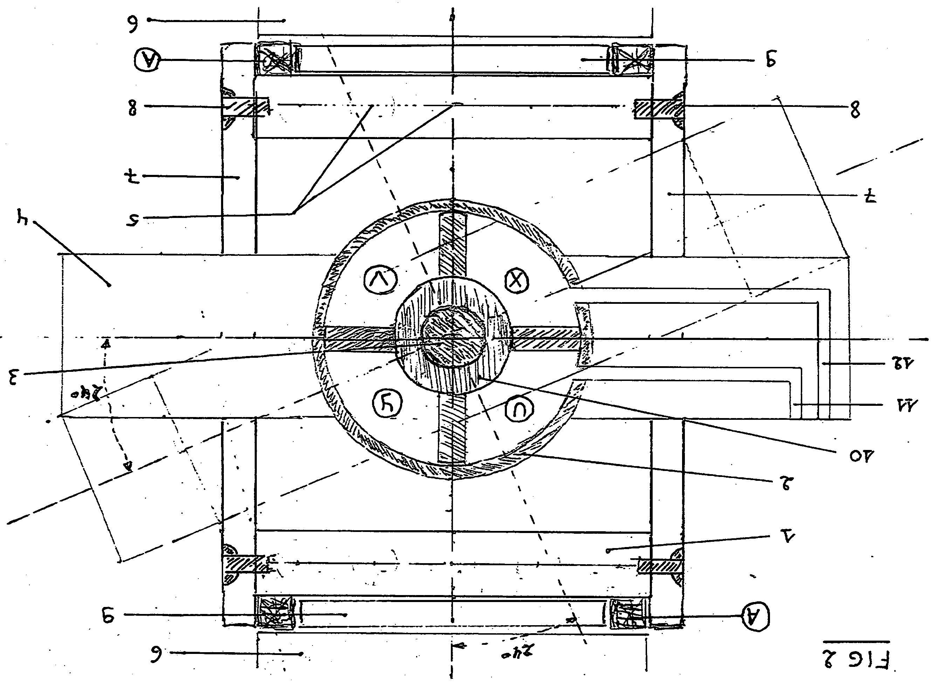

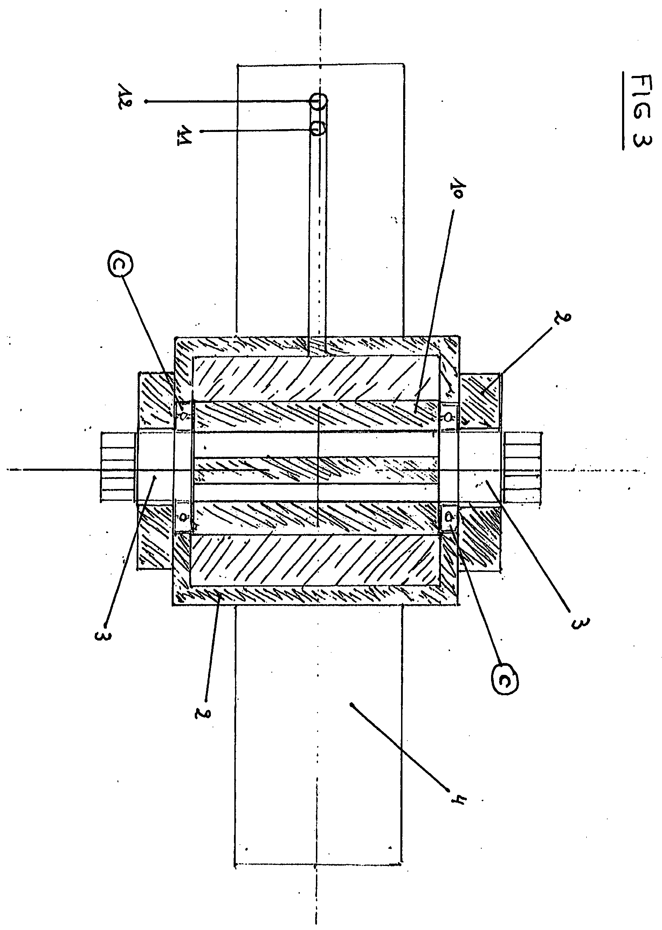

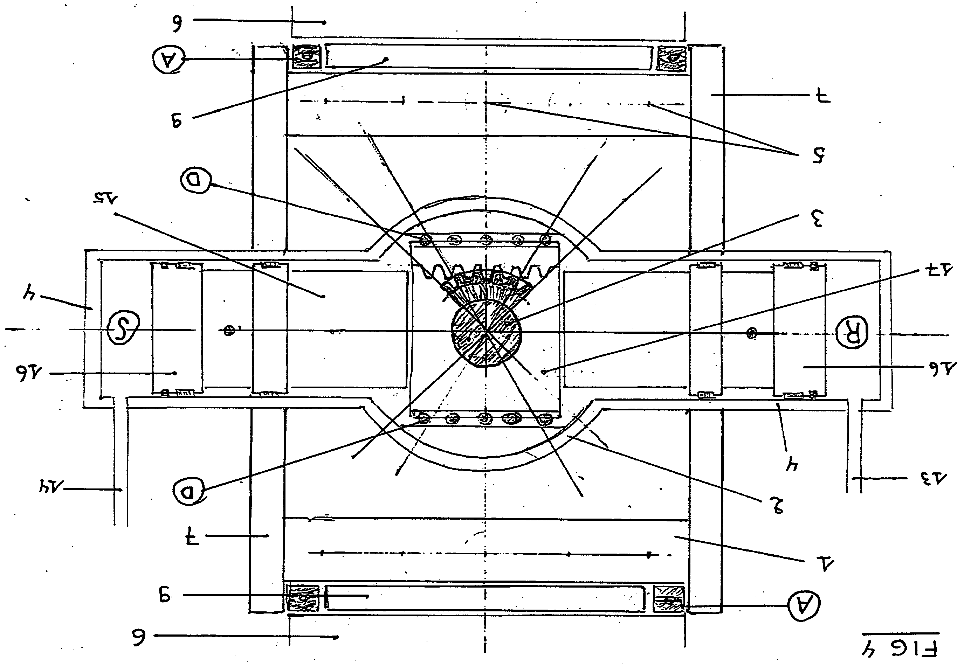

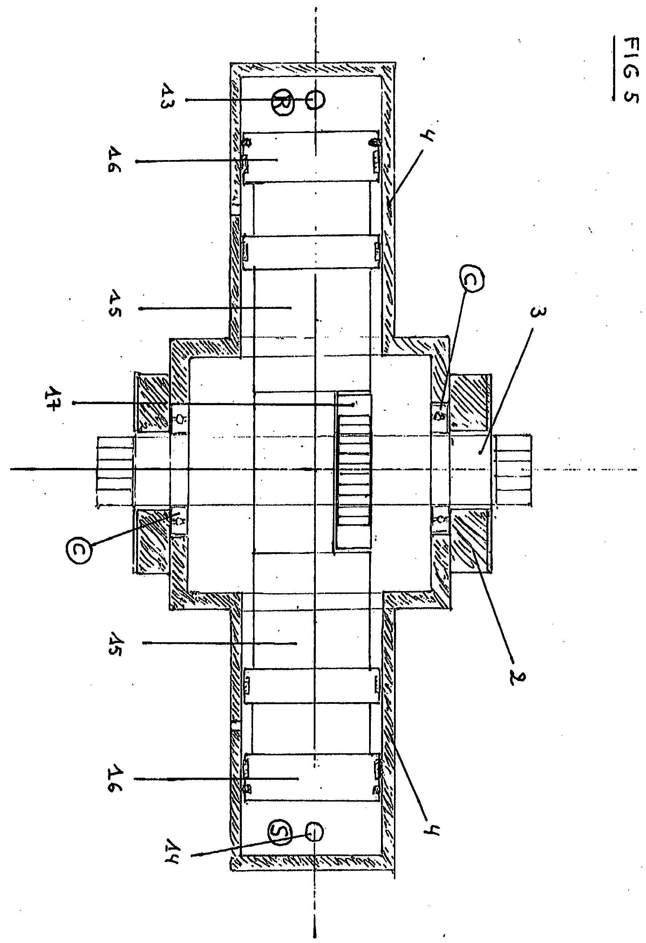

The rotation of the steering axle (3) is hydraulically activated from within the steering house (2). This can be achieved by opting for a rotary actuator or a piston actuator.
- Rotary actuator (figures 2 and 3): The steering axle (3) is connected to the rotor (10) that divides the space within the steering house (2) in multiple separated chambers (X, Y, U, V). The more chambers, the more restricted the steering angle λ_{H} becomes. All chambers are filled with hydraulic fluid under pre-pressure. As soon as the pressure is increased through the hydraulic line (11), the pressure in chamber U and V rises. The rotor (10) will move clockwise and the hydraulic fluid in chambers X and Y is pushed away via the hydraulic line (12). If the pressure is increased through the hydraulic line (12), the pressure in chambers X and Y rises, the rotor (10) rotates counter clockwise and the hydraulic fluid in chambers U and V is pushed away through the hydraulic line (11). The larger the dimensions, diameter and height, of the steering house (2) and the larger the number of rooms, the lower the pressure built-up in the rotary actuator. For the steering of a motorcycle the steering house configuration, as depicted in figures 2 and 3, necessitates a maximal pressure of 12 bar on top of the pre-pressure.
- Piston actuator (figures 4 and 5): The piston actuator uses the available space inside the steering house (2) and the wheel spindle (4). The piston-rod (15) has pistons (16) at both ends and can move in both directions within the wheel spindle (4). The chambers R and S are filled with a hydraulic fluid. When the pressure in chamber R increases by supply of hydraulic fluid through the hydraulic line (13), the piston-rod (15) will move to the right. The hydraulic fluid in chamber S is drained away through the hydraulic line (14). The gear plate (17) turns the axial movement of the piston-rod (15) into a rotating movement of the steering axle (3). When the piston-rod (15) moves to the right this results in a counter clockwise rotation of the steering axle (3). Conversely, when the pressure in chamber S increases through supply of hydraulic fluid through the hydraulic line (14), the piston-rod (15) will move to the left and this will result in a clockwise rotation of the steering axle (3). The gear plate (17) is journalled (D) in the steering house (2). By doing so the gear plate (17) can be manufactured broader than the piston-rod thereby creating extra space for the steering axle (3) with the gear wheel which results in a longer lever arm. The longer the lever arm, the lower the necessary steering pressure. The gear plate (17), journalled in the steering house (2), ensures the piston-rod (15) only being stressed in axial direction, enabling optimal and precise steering. The larger the diameter of the wheel spindle (4) and the steering house (2), the lower the steering pressure in the chambers R and S. For the steering of a motorcycle, the steering house configuration as depicted in figures 4 and 5 needs a maximal pressure of 40 bar. When increasing the diameter of the wheel spindle (4) to 70 mm, the maximal pressure drops to 17 bar. As stated above, the diameter of the wheel spindle (4) has a significant impact on the steering angle λ_{H}. For a steering angle λ_{H} of 24°, the diameter of the wheel hub (1) will increase by 20 mm with an increase of the diameter of the wheel spindle (4) to 70 mm.

The rotary actuator (figures 2 and 3) or the piston actuator (figures 4 and 5) spins the steering axle (3). Likewise, the wheel hub (1) connected to the steering axle (3) rotates around the steering house (2). There is no mechanical connection between the steer (18) and the wheel hub (1).

### The steering

The hydraulic pressure that steers the rotary actuator or piston actuator in the steering house (2) is transferred by hydraulic fluid through the hydraulic lines. This pressure can be generated by a power steering device (motor-driven hydraulic pump). To this end, recourse can be made to long known and tested steering systems from the automobile world and the industry. Such systems take up space, are not cheap and weigh a couple of kilograms. Since no mechanical connection exists between the steer (18) and the wheel hub (1), this power steering will preferably be electrical to allow steering with a non-running engine using the power from the battery.

For lighter and/ or sportier vehicles where cost and weight play an important role and / or in case no power supply for power steering can be called upon, a hydraulic system without power steering is a preferred option.

The CHS-Z steering system can make use of a light and compact hydraulic system without power steering.

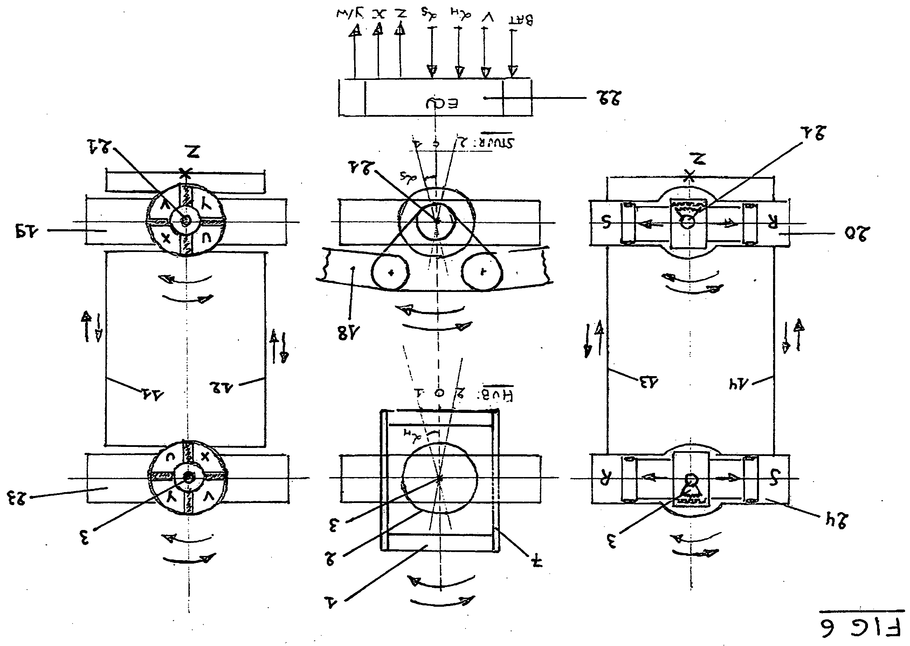

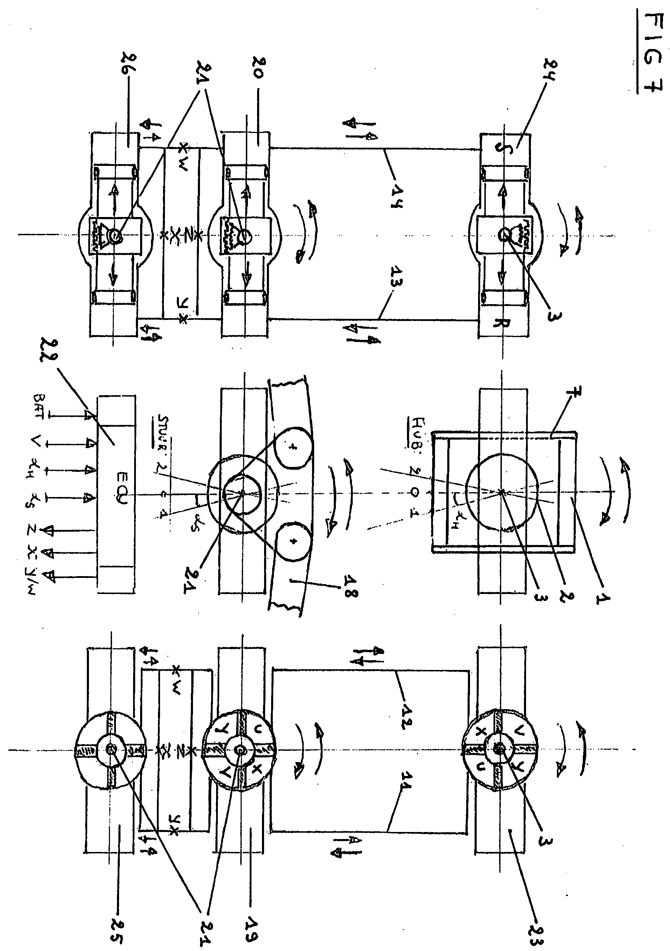

A description of this hydraulic steering system without power steering is given (figures 6 and 7). For the sake of simplicity the reservoir for the hydraulic fluid and the temperature compensator, needed for a stable pre-pressure and the absorption of the variations in the volume of the hydraulic fluid due to increasing and decreasing temperatures, are left out.
- The steering movement is directly and under all circumstances transferred from the steer to the wheel hub (1). In order to do so a second rotary actuator (19) or a second piston actuator (20), depending on the chosen option, is situated under the steer. The steer (18) is fitted to the steering axle (21) of these actuators.
- Rotary actuator: If the steer (18) turn clockwise, hydraulic fluid is transferred from the chambers X and Y of the rotary actuator (19) that is connected to the steer, via the hydraulic line (11) to the chambers U and V of the rotary actuator (23) in the steering house (2). This causes the steering axle (3), together with the wheel hub (1) and the wheel to turn clockwise.
- Piston actuator: If the steer (18) turns clockwise, hydraulic fluid is transferred from the chamber R of the piston actuator (20) that is connected to the steer, via the hydraulic line (14) to the chamber S of the piston actuator (24). The steering axle (3) makes the wheel hub (1) and the wheel turn clockwise.

### The monitor and compensation device

In case the hydraulic components are designed sufficiently accurately and taking the relatively low hydraulic pressure that occurs in the hydraulic system into account, the possible deviation between the steering angle of the wheel hub (1)) λ_{H} and steer (18) λs will be very small. Nevertheless, a deviation needs to be considered and therefore it has to be possible to monitor and adjust for the deviation under all circumstances, thereby guaranteeing a safe and optimal steering feel.

In order to maintain the steering angle of the wheel hub (1) λ_{H} and the steer (18) λs perfectly synchronously the CHS-Z steering system is equipped with a monitor and compensation device. For this purpose both the steering angle of the wheel hub (1) λ_{H} and the steering angle of the steer (18) As are measured by an angle sensor and the data are permanently transferred to the ECU (22).

The ECU (22) will monitor the λ_{H} - λs deviation and apply corrections, taking the direction and the speed of the wheel hub (1) λ'_{H} and steer (18) λ'_{S} into account. Furthermore, the ECU (22) can also use additional data originating from other sensors, if present, such as speed, acceleration, braking force, position of the throttle, lean angle and other.

The ECU (22) shall use the received information and input from the angle sensors and maintain the steering angle of the wheel hub (1) λ_{H} and the steer (18) As perfectly synchronously using the following rules:

| |
|---|
| *- a ≤ λ_{H} - λ_{S} ≤ + a* |
| *ECU keeps control valve z closed and control valves w*/*y -x are not activated* |
| - *a* > λ*_{H}* - λ*_{S}* > + *a* |
| *ECU opens control valve z and steers control valve w*/*y* - *x* |
| *- b > λ_{H} - λ_{S} ≤ + b* |
| *ECU steers control valve z and control valve w*/*y-x and gives a warning signal* |

The angular deviation tolerances a and b (a > b) are determined by the constructor or can be chosen by the user within the range of certain minimum and maximum values.

There are two possible systems: one without steering damping (figure 6) and one with steering damping (figure 7).
- ECU + control valve z (figure 6): The ECU (22) will steer the control valve z and by doing so limit the deviation between both angles λ_{H} and λ_{S} within the values a and b chosen by the constructor, considering the steering angle of the wheel hub (1) A_{H} and the steering angle of the steer (18) λ_{S}, the deviation X_{H} - λ_{S}, the direction and the speed of the wheel hub (1) λ'_{H} and steer (18) λ'_{S}.
- ECU + control valves z - w/y - x (figure 7): The CHS-Z steering device can easily be combined with an additional rotary actuator (25) or and additional piston actuator (26) performing also as steering damping. Such an electronic steering damper by means of a rotary actuator is already applied by Honda (cf. Honda HESD European patent 0 4012506.4 publication 18.08.2011 Bulletin 2011/32). The ECU (22) can switch on this additional hydraulic actuator in the compensation process in order to maintain the steering angle of the wheel hub (1) λ_{H} and the steer (18) As perfectly synchronously. The use of the additional w/y - x control valve ensures an even more precise regulation and control. The ECU (22) will steer the control valves z and the w/y - x and by doing so limit the deviation between both angles λ_{H} and λ_{S} within the values a and b chosen by the constructor, considering the steering angle of the wheel hub (1) λ_{H} and the steering angle of the steer (18) λ_{S}, the deviation λ_{H} λ_{S}, the direction and the speed of the wheel hub (1) λ'_{H} and steer (18) λ'_{S}.

If the angular deviation λ_{H}-λ_{S} sexceeds the maximum angular deviation tolerance b, the monitor and compensation device does not function properly. The user will be informed by a visual or auditory warning signal. The user will stop the vehicle and can manually steer the control valve z and malign the steer (18) and the wheel hub (1) by pressing the reset button of the ECU (22). As soon as λ_{H} - λ_{S} = 0, the pressure control valve z is closed and the steer (18) and the wheel hub (1) are synchronized again.

The same procedure is followed each time the vehicle is started. When the power supply fails, the driver or operator can correct the angular deviation between the steer (18) and the wheel (6) by manually operating the control valve z and moving the steer (18) back and forward.

If only the control valve z is used the constructor will connect, of both used actuators - one inside the steering house (2) and one connected to the steer (18) in theory perfectly identical but in reality slightly deferring - the actuator with the largest volume yield per degree of rotation to the steer (18).

Based on the information coming from the angle sensors the ECU calculates the angular position of the steer λs and of the wheel hub λ_{H}, the angular deviation λ_{H} - λ_{S}, the angular velocity of the steer λ'_{S} and of the wheel hub λ'_{H} and the difference in angular velocity λ'_{H} - A'_{S}. The ECU (22) will steer the control valve z and if a steering damper is present also the valve w/y-x, based on a decision-table taking into account the 20 possible combinations of angular position and angular velocity λ'_{H} - λ'_{S}. If other sensors are present this information can be taken into account by the ECU.

The foregoing described implementation of the invention is not exhaustive: additions, deviations and adjustments can be implemented without deviating from the scope of this invention. The compact hydraulic steering system with a monitor and compensation device uses the limited space inside the inner wheel for steering using the spindle and the steering house as an integral housing for the hydraulic actuator being a rotary or piston actuator. The traditional steering system through adjustable linkage rods, levers and pivots between the steer and the wheel is done without. The compact hydraulic system is therefore not visible from the exterior which implies a significant improvement in terms of aesthetical point of view and design. The compact hydraulic steering system might as such be used for all kind of steering applications where optimal use of space and weight is searched for. There are several possible combinations of rotary actuator, piston actuator and/or steering dampers so as to accomplish the hydraulic steering and the ECU can be equipped with additional steering valves steered by means of the input from the angular and other sensors. The CHS-Z steering system can be used for steering non-driven wheels as well as for steering driven wheels. In that case, the use of a constant velocity shaft between gearbox and steered wheel will be necessary. The CHS-Z steering system can also be applied for vehicles or installations where no use can be made of mechanical steering mechanism, be it power assisted or not, and where as a result the designer/constructor needs to find a robust, compact, simple and reliable non-mechanic connection for the steering. The CHS-Z steering system can be applied to the steering of multiple wheels as well, be it driven or not. The ECU can be programmed in such a way that, taking into account different driving circumstances, the steered wheels will move synchronously or two by two synchronously or entirely independent.

## Claims

1. A compact hydraulic steering system for steering the wheel of a motor vehicle, comprising:
a wheel (6), a wheel hub (1), a wheel spindle (4), a steering house (2) and a first steering axle (3), wherein
- the wheel (6) rotates in use around the wheel hub (1) for allowing movement of the motor vehicle in the forward and aft direction; and
- the wheel spindle (4) is configured to be held on both sides by the vehicle suspension or to be connected to the chassis of the vehicle by means of a single-sided suspension; and
- the wheel hub (1) includes on both sides side plates (7) that position the wheel (6); and
- the steering house (2) is situated centrally inside the wheel hub (1) when seen in a top view and in a side view of the wheel (6); and
the steering system being **characterized in that**
- a hydraulic actuator (23, 24) is provided, which is either a rotary (23) or a piston (24) actuator; and
- the wheel hub (1) is connected to the first steering axle (3) and can rotate around the steering house (2) for steering the wheel (6), and
- the wheel spindle (4) and the steering house (2) form one whole, which accommodates the first hydraulic actuator (23, 24) and which is configured to be connected to two hydraulic lines (11 to 14) for providing hydraulic pressure to the first hydraulic actuator (23, 24); and
- the rotational movement of the first steering axle (3), the wheel hub (1) and
the wheel (6) is in use hydraulically controlled by the first hydraulic actuator (23, 24), which thereto is connected to the first steering axle (3).

2. The compact hydraulic steering system, according to claim 1, wherein the first hydraulic actuator is a rotary actuator (23) and the rotary movement of the first steering axle (3) is hydraulically driven by a rotor (10) which divides the space inside the steering house (2) in four separate chambers (X, Y, U, V), whereby, when in use, the pressure is increased via the first hydraulic line (11), the pressure in two first chambers (U, V) rises and the rotor (10) fixedly connected to the first steering axle (3) moves clockwise together with the wheel hub (1) and the wheel (6) and the hydraulic fluid in two second chambers (X, Y) is pushed away via the second hydraulic line (12) and whereby, when in use, the pressure is increased via the second hydraulic line (12), the pressure rises in the two second chambers (X, Y) and the rotor (10) fixedly connected to the first steering axle (3) moves counter clockwise together with the wheel hub (1) and the wheel (6) and the hydraulic fluid in the two first chambers (U, V) is pushed away via the first hydraulic line (11).

3. The compact hydraulic steering system according to claim 1, wherein the first hydraulic actuator is a piston actuator (24) and the rotary movement of the first steering axle (3) is hydraulically driven by two pistons (16) mounted on a single piston rod (15), whereby, when in use, the pressure in a first chamber (R) increases through supply of hydraulic fluid via the first hydraulic line (13), the piston-rod (15) moves to the right and rotates via a gear plate (17) journaled (D) in the steering house (2), the first steering axle (3) together with the wheel hub (1) and the wheel (6) counter clockwise and whereby, when in use, the pressure in a second chamber (S) increases through supply of hydraulic fluid via the second hydraulic line (14), the piston-rod (15) moves to the left which results in a clockwise rotation of the first steering axle (3) together with the wheel hub (1) and the wheel (6).

4. The compact hydraulic steering system according to claim 2 further comprising a steer (18) connected via a second steering axle (21) to a second rotary actuator (19) and a monitor and compensation device with ECU (22) whereby the angular position (λ_{S}) of the steer (18) and the angular position (λ_{H}) of the wheel hub (1), the angular deviation (λ_{H} - λ_{S}), the angular velocity (λ'_{S}) of the steer (18) and the angular velocity o X,H )of the wheel hub (1), the direction and the difference in angular velocity (λ'_{H} - λ'_{S}) by means of angular sensors is monitored and the ECU (22) steers a pressure control valve (z) which, when opened, connects the first chambers (U, V) to second chamber (X, Y) of the second rotary actuator (19) which is connected through hydraulic lines (11, 12) to the rotary actuator (23) inside the steering house (2), so that the rotation of the steer (18) first results in the same rotation of the wheel (6) and the wheel hub (1) connected to the steering house (2) via the first steering axle (3).

5. The compact hydraulic steering system according to claim 4 further comprising a steering damper (25) whereby the monitor and compensation device with the ECU (22) steers pressure control valves (z, w, y, x) and the steering damper (25) in the compensation process.

6. The compact hydraulic steering system according to claim 3, further comprising a steer (18) connected via a second steering axle (21) to a second piston actuator (20) and a monitor and compensation device with ECU (22) whereby the angular position (λ_{S}) of the steer (18) and the angular position (λ_{H}) of the wheel hub (1), the angular deviation (λ_{H} - λ_{S}), the angular velocity (λ'_{S}) of the steer (18) and the angular velocity (λ'_{H}) of the wheel hub (1), the direction and the difference in angular velocity (λ'_{H} - λ'_{S}) by means of angular sensors is monitored and the ECU (22) steers a pressure control valve (z) which when opened, connects the chambers (R, S) of the second piston actuator (20) which is connected through hydraulic lines (13, 14) to the first piston actuator (24) in the steering house (2), so that the rotation of the steer (18) results in the same rotation of the wheel (6) and the wheel hub (1) connected to the steering house (2) via the first steering axle (3).

7. The compact hydraulic steering system according to claim 6 further comprising a steering damper (26) whereby the monitor and compensation device with the ECU (22) steers pressure control valves (z, w, y, x) and the steering damper (26) in the compensation process.

## Patentansprüche

1. Kompaktes hydraulisches Lenksystem zur Lenkung des Rades eines Kraftfahrzeuges, umfassend:
ein Rad (6), eine Radnabe (1), eine Radachse (4), ein Lenkgehäuse (2) und eine erste Lenkachse (3), wobei
- das Rad (6) sich im Betrieb um die Radnabe (1) dreht, um die Bewegung des Kraftfahrzeuges in Vorwärts- und Rückwärtsrichtung zu ermöglichen; und
- die Radachse (4) dafür entworfen ist, auf beiden Seiten des Fahrzeugs von der Aufhängung festgehalten zu werden oder mit dem Gestell des Fahrzeugs über eine einseitige Aufhängung verbunden zu werden; und
- die Radnabe (1) auf beiden Seiten Seitenplatten (7) umfasst, die das Rad (6) positionieren; und
- das Lenkgehäuse (2) in Draufsicht und in einer Seitenansicht des Rades (6) gesehen sich zentral in der Radnabe (1) befindet; und
das Lenksystem **dadurch gekennzeichnet ist, dass**
- eine hydraulische Betätigungsvorrichtung (23, 24) bereitgestellt ist, die entweder ein Drehantrieb (23) oder ein Kolbenantrieb (24) ist; und
- die Radnabe (1) mit der ersten Lenkachse (3) verbunden ist und um dem Lenkgehäuse (2) zur Lenkung des Rades (6) rotieren kann; und
- die Radachse (4) und das Lenkgehäuse (2) ein Ganzes bilden, in dem die erste hydraulische Betätigungsvorrichtung (23, 24) untergebracht ist und das dafür entworfen ist, mit den beiden Hydraulikleitungen (11 bis 14) verbunden zu werden, um den Hydraulikdruck an der ersten hydraulischen Betätigungsvorrichtung (23, 24) bereitzustellen; und
- die Drehbewegung der ersten Lenkachse (3), der Radnabe (1) und des Rades (6) im Betrieb hydraulisch durch die erste hydraulische Betätigungsvorrichtung (23, 24) gesteuert wird, die für diesen Zweck mit der ersten Lenkachse (3) verbunden ist.

2. Kompaktes hydraulisches Lenksystem nach Anspruch 1, wobei die erste hydraulische Betätigungsvorrichtung ein Drehantrieb (23) ist und die Drehbewegung der ersten Lenkachse (3) hydraulisch über den Rotor (10) erfolgt, der den Raum im Lenkgehäuse (2) in vier getrennte Kammern (X, Y, U, V) verteilt, wobei wenn der Druck im Betrieb über die erste Hydraulikleitung (11) erhöht wird, der Druck in den beiden ersten Kammern (U, V) steigt und der fest mit der ersten Lenkachse (3) verbundene Rotor (10) sich zusammen mit der Radnabe (1) und dem Rad (6) im Uhrzeigersinn bewegt und die Hydraulikflüssigkeit in den beiden zweiten Kammern (X, Y) über die zweite Hydraulikleitung (12) verdrängt wird, und wobei wenn der Druck im Betrieb über die zweite Hydraulikleitung (12) erhöht wird, der Druck in den beiden zweiten Kammern (X, Y) steigt und der fest mit der ersten Lenkachse (3) verbundene Rotor (10) sich zusammen mit der Radnabe (1) und dem Rad (6) gegen den Uhrzeigersinn bewegt und die Hydraulikflüssigkeit in den beiden ersten Kammern (U, V) über die zweite Hydraulikleitung (11) verdrängt wird.

3. Kompaktes hydraulisches Lenksystem nach Anspruch 1, wobei die erste hydraulische Betätigungsvorrichtung ein Kolbenantrieb (24) ist und die Drehbewegung der ersten Lenkachse (3) hydraulisch durch die Kolben (16) erfolgt, die auf einer einzelner Kolbenstange (15) montiert sind, wobei wenn im Betrieb der Druck in einer ersten Kammer (R) durch die Versorgung mit Hydraulikflüssigkeit über die erste Hydraulikleitung (13) steigt, die Kolbenstange (15) sich nach rechts bewegt und über die Zahnstange (17), welche im Lenkgehäuse (2) gelagert (D) ist, die erste Lenkachse (3) zusammen mit der Radnabe (1) und dem Rad (6) gegen den Uhrzeigersinn dreht und wobei wenn im Betrieb der Druck in einer zweiten Kammer (S) durch die Versorgung mit Hydraulikflüssigkeit über die zweite Hydraulikleitung (14) steigt, die Kolbenstange (15) sich nach links bewegt, was zu einer Drehung im Uhrzeigersinn der ersten Lenkachse (3) zusammen mit der Radnabe (1) und dem Rad (6) führt.

4. Kompaktes hydraulisches Lenksystem nach Anspruch 2, ferner umfassend eine Lenkung (18), die über eine zweite Lenkachse (21) mit einem zweiten Drehantrieb (19) verbunden ist, und eine Überwachungs- und Ausgleichsvorrichtung mit ECU (22), wobei die Winkelposition (As) der Lenkung (18) und die Winkelposition (λ_{H}) der Radnabe (1), die Winkelabweichung (λ_{H} - (λ_{S}), die Winkelgeschwindigkeit (λ'_{S}) der Lenkung (18) und die Winkelgeschwindigkeit (λ'_{H}) der Radnabe (1), die Richtung und die Differenz der Winkelgeschwindigkeit (λ'_{H} - λ'_{S}) mit Winkelsensoren überwacht werden, und die ECU (22) ein Druckregelventil (z) steuert, das in geöffneter Stellung die erste Kammern (U, V) mit den zweiten Kammern (X, Y) des zweiten Drehantriebes (19) verbindet, der über Hydraulikleitungen (11, 12) mit dem ersten Drehantrieb (23) im Lenkgehäuse (2) verbunden ist, so dass die Drehung der Lenkung (18) dieselbe Drehung des Rades (6) und der Radnabe (1), die über die erste Lenkachse (3) mit dem Lenkgehäuse (2) verbunden ist, bewirkt.

5. Kompaktes hydraulisches Lenksystem nach Anspruch 4, ferner umfassend einen Lenkungsdämpfer (25), wobei die Überwachungs- und Ausgleichsvorrichtung mit ECU (22) die Druckregelventile (z, w, y, x) und den Lenkungsdämpfer (25) im Ausgleichsprozess steuert.

6. Kompaktes hydraulisches Lenksystem nach Anspruch 3, ferner umfassend eine Lenkung (18), die über eine zweite Lenkachse (21) mit einem zweiten Kolbenantrieb (20) und einer Überwachungs- und Ausgleichsvorrichtung mit ECU (22) verbunden ist, wobei die Winkelposition (λ_{S}) der Lenkung (18) und die Winkelposition (λ_{H}) der Radnabe (1), die Winkelabweichung (λ_{H} - λ_{S}) die Winkelgeschwindigkeit (λ'_{S}) der Lenkung (18) und die Winkelgeschwindigkeit (λ'_{H}) der Radnabe (1), die Richtung und die Differenz der Winkelgeschwindigkeit (λ'_{H} - λ'_{S}) mit Winkelsensoren überwacht werden und die ECU (22) ein Druckregelventil (z) steuert, das in geöffneter Stellung die Kammern (R,S) des zweiten Kolbenantriebes (20) verbindet, der über Hydraulikleitungen (13, 14) mit dem ersten Kolbenantrieb (24) im Lenkgehäuse (2) verbunden ist, so dass die Drehung der Lenkung (18) dieselbe Drehung des Rades (6) und der Radnabe (1), die über die erste Lenkachse (3) mit dem Lenkgehäuse (2) verbunden ist, bewirkt.

7. Kompaktes hydraulisches Lenksystem nach Anspruch 6, ferner umfassend einen Lenkungsdämpfer (26), wobei die Überwachungs- und Ausgleichsvorrichtung mit ECU (22) die Druckregelventile (z, w, y, x) und den Lenkungsdämpfer (26) im Ausgleichsprozess steuert.

## Revendications

1. Système compact de direction hydraulique pour diriger la roue d'un véhicule à moteur, comprenant:
une roue (6), un moyeu (1), un axe de roue (4), un boîtier de direction (2) et un premier pivot de direction (3), dans lequel
- la roue (6) tourne en marche autour du moyeu (1) pour permettre le mouvement du véhicule à moteur en marche avant et arrière; et
- l'axe de roue (4) est configuré pour être maintenu sur les deux côtés par la suspension du véhicule ou pour être connecté au châssis du véhicule par une suspension mono-bras; et
- le moyeu (1) comporte de chaque côté une plaque (7) qui positionnent la roue (6); et
- le boîtier de direction (2) est situé au centre à l'intérieur du moyeu (1) vue depuis le dessus et le côté de la roue (6); et
le système de direction étant **caractérisé en ce que**
- un actuateur hydraulique (23, 24) est prèvu, qui est soit un actuateur rotatif (23) ou à piston (24); et
- le moyeu (1) est connecté au premier pivot de direction (3) et peut tourner autour du boîtier de direction (2) pour diriger la roue (6), et
- l'axe de roue (4) et le boîtier de direction (2) forment un tout, qui reçoit le premier actuateur hydraulique (23, 24) et qui est configuré pour être connecté sur deux lignes hydrauliques (11 à 14) pour fournir la pression hydraulique au premier actuateur hydraulique (23, 24); et
- le mouvement rotatif du premier pivot de direction (3), le moyeu (1) et la roue (6) en marche est contrôlé hydrauliquement par le premier actuateur hydraulique (23, 24), qui est connecté au premier pivot de direction (3).

2. Le système compact de direction hydraulique, selon la revendication 1, où le premier actuateur hydraulique est un actuateur rotatif (23) et le mouvement rotatif du premier pivot de direction (3) est entraîné hydrauliquement par le rotor (10) qui divise l'espace dans le boîtier de direction (2) en quatre chambres séparées (X, Y, U, V), où en marche, la pression est augmentée via la première ligne hydraulique (11), la pression augmente dans les deux premières chambres (U, V) et le rotor (10) connecté de manière fixe au premier pivot de direction (3) tourne dans le sens des aiguilles d'une montre avec le moyeu (1) et la roue (6), tandis que le liquide hydraulique dans les deux secondes chambres (X, Y) est repoussé via la deuxième ligne hydraulique (12) et où, en marche, la pression est augmentée via la deuxième ligne hydraulique (12), la pression augmente dans les deux secondes chambres (X, Y) et le rotor (10) connecté de manière fixe au premier pivot de direction (3) tourne dans le sens inverse des aiguilles d'une montre avec le moyeu (1) et la roue (6), tandis que le liquide hydraulique dans les deux premières chambres (U, V) est repoussé via la première ligne hydraulique (11).

3. Le système compact de direction hydraulique, selon la revendication 1, où le premier actuateur hydraulique est un actuateur à piston (24) et le mouvement rotatif du premier pivot de direction (3) est entraîné hydrauliquement par des pistons (16) montés sur une seule tige de piston (15), où, en marche, la pression dans une première chambre (R) augmente par l'alimentation de fluide hydraulique via la première ligne hydraulique (13), la tige de piston (15) se déplace vers la droite et fait tourner via la plaque dentée (17) montée (D) dans le boîtier de direction (2) le premier pivot de direction (3) avec le moyeu (1) et la roue (6) dans le sens inverse des aiguilles d'une montre, et où, en marche, la pression dans une seconde chambre (S) augmente par l'alimentation de fluide hydraulique via la deuxième ligne hydraulique (14), la tige de piston (15) se déplace vers la gauche et fait tourner le premier pivot de direction (3) avec le moyeu (1) et la roue (6) dans le sens des aiguilles d'une montre.

4. Le système compact de direction hydraulique, selon la revendication 2, comprend en outre un guidon (18) connecté via un deuxième pivot de direction (21) à un deuxième actuateur rotatif (19) et un dispositif de monitorage et de compensation avec ECU (22) où la position angulaire (As) du guidon (18) et la position angulaire (λ_{H}) du moyeu (1), la déviation angulaire (λ_{H}-λ_{S}), la vitesse angulaire (λ'_{S}) du guidon (18) et la vitesse angulaire (λ'_{H}) du moyeu (1), la direction et la différence de vitesse angulaire (λ'_{H} - λ'_{S}) sont surveillés par des capteurs angulaires et l'ECU (22) pilote une vanne de commande de pression (z) qui, lorsqu'elle est ouverte, connecte les premières chambres (U, V) aux secondes chambres (X, Y) du second actuateur rotatif (19) qui est connecté via les lignes hydrauliques (11, 12) au premier actuateur rotatif (23) à l'intérieur du boîtier de direction (2), de sorte que la rotation du guidon (18) produit la même rotation de la roue (6) et du moyeu (1) connecté au boîtier de direction (2) via le premier pivot de direction (3).

5. Le système compact de direction hydraulique, selon la revendication 4, comprend en outre un amortisseur de direction (25) où le dispositif de monitorage et de compensation avec ECU (22) pilote des vannes de commande de pression (z, w, y, x) et l'amortisseur de direction (25) dans le processus de compensation.

6. Le système compact de direction hydraulique, selon la revendication 3, comprend en outre un guidon (18) connecté via un deuxième pivot de direction (21) à un deuxième actuateur à piston (20) et un dispositif de monitorage et de compensation avec ECU (22) où la position angulaire (λ_{S}) du guidon (18) et la position angulaire (λ_{H}) du moyeu (1), la déviation angulaire (λ_{H} - λ_{S}), la vitesse angulaire (λ'_{S}) du guidon (18) et la vitesse angulaire (λ'_{H}) du moyeu (1), la direction et la différence de vitesse angulaire (λ'_{H} - λ'_{S}) sont surveillés par des capteurs angulaires et l'ECU (22) pilote une vanne de commande de pression (z) qui, lorsqu'elle est ouverte, connecte les chambres (R, S) du second actuateur à piston (20) qui est connecté via les lignes hydrauliques (13, 14) au premier actuateur à piston (20) à l'intérieur du boîtier de direction (2), de sorte que la rotation du guidon (18) produit la même rotation de la roue (6) et du moyeu (1) connecté au boîtier de direction (2) via le premier pivot de direction (3).

7. Le système compact de direction hydraulique, selon la revendication 6, comprenant en outre un amortisseur de direction (26) où le dispositif de monitorage et de compensation avec ECU (22) commande des vannes de commande de pression (z, w, y, x) et l'amortisseur de direction (26) dans le processus de compensation.
